# EUROPEAN PATENT SPECIFICATION

(11) **EP 2 744 351 B1**
(45) Date of publication and mention of the grant of the patent: **09.12.2015**
(21) Application number: 12745994.9
(22) Date of filing: 10.07.2012
(51) Int. Cl.: A23J 1/02, A23J 1/10, A23J 3/30, A23J 3/34, C11B 3/06, C11B 13/00

(54) **METHOD FOR DEPROTEINIZATION OF WASTE FATS AND OILS**
VERFAHREN ZUR ENTPROTEINISIERUNG VON FETTEN UND ÖLEN
PROCÉDÉ DE DÉPROTÉINISATION DE DÉCHETS DE GRAISSES ET D'HUILES

(30) Priority: 14.07.2011 CZ 20110422
(43) Date of publication of application: 25.06.2014
(73) Proprietor: Univerzita Tomase Bati Ve Zline, 76001 Zlin (CZ)
(72) Inventor: KOLOMAZNIK, Karel, 76005 Zlin (CZ); PECHA, Jiri, 76005 Zlin (CZ); VASEK, Vladimir, 76001 Zlin (CZ); FRIEBROVA, Veronika, 76005 Zlin (CZ); PODZIMEK, Petr, 51232 Martinice v Krkonosich (CZ)
(74) Representative: Kreizlova, Dana
(86) International application number: PCT/CZ2012/000061
(87) International publication number: WO 2013/007223

(56) References cited:
- WO-A1-86/00788
- WO-A1-92/01387
- KR-A- 20010 055 559
- SK-B6- 281 336
- US-A- 4 473 589
- US-A1- 2008 034 646

## Description

### Technical field

The invention comprises a method for deproteinization of waste fats and oils, especially those generated by the tanning, meat and food processing industries such as waste fats from tanneries, limed collagen splits, or waste fats from slaughter houses and rendering plants.

### Background of the invention

Waste fats generated by the tanning, food processing and meat industries contain considerable amount of nitrogen compounds which decompose quickly. The decomposition results in an unpleasant odor that substantially complicates any further utilization of these waste fats. For this reason most of waste fats is incinerated. However, the incineration is burdened with charges, and in case the waste fats contain proteins there are toxic dioxins present in the combustion products which make the incineration disputable also from the environmental point of view. Nowadays the most frequent way of deodorization is with the use of sulfuric acid which eliminates the protein decomposition products. Nevertheless, this method is applicable only in case of low protein content and is not economically beneficial. If the protein content is higher, for example in the case of limed collagen splits generated during raw hide conversion into leather, the deodorization with sulfuric acid is also technologically demanding.

For the reasons mentioned above the waste fats represent not only an environmental issue but also economical, since no environmentally friendly and economically viable method for their processing has been developed so far.

KR 2001 0055559 A discloses a solid-liquid separation method of food waste using alkaline hydrolysis.

SK90695 A3 discloses proteinaceous animal waste hydrolysate preparation for use in e.g. flocculation solutions, as food additive, by adding alkali and alkaline earth oxide(s) or hydroxide(s) in combination with 1-8% of amine and by adding usual enzymes.

US 4 473 589 A discloses the hydrolysis of sources of protein, such as residues and waste products from processing fish, poultry, pork and beef as well as single cell micro-organisms, to provide liquid products containing substantially all of the component amino acids, lipids and phosphorus in metabolically useful form.

### Detailed description of the invention

The invention of a method for deproteinization of waste fats and oils contributes to the solution of the above stated environmental and economical problems. The principal of the method lies in the removal of the solid protein component and free fatty acids. The respective waste feedstock is subjected to alkaline hydrolysis in the presence of an organic base or a mixture of organic bases. The resulting products are two separated fractions of a liquid protein

hydrolyzate and a refined fat or oil, which is free of both the protein and free fatty acid components.

The organic base or bases used in the hydrolysis process is at least one amine selected from the group comprising isopropylamine, diisopropylamine, butylamine, cyclohexylamine and tetramethylammonium hydroxide.

The alkaline hydrolysis is performed with advantage in the presence of a proteolytic enzyme which accelerates the hydrolytic process.

The hydrolysis conditions are set up in the way that the fat content is not substantially changed by the reaction. After cooling the reaction mixture, the upper (fat) layer is practically free of protein and can be directly used as refined fat in the cosmetic industry, production of high quality glycerin, alkyl esters of fatty acids, etc. The lower layer containing soluble protein hydrolyzate finds application as an organic nitrogen fertilizer, resistance inductor (biostimulator), in the production of auxiliary agents in the leather manufacturing and textile industries, collagen additive in shampoos, etc.

### Examples

Fleshings obtained by the mechanical removal of the adhering flesh from hides (so called fleshing) were used as the input feedstock. The fleshings contained 15% w/w of water (bound to the protein component), 25% w/w of subcutaneous tissue (protein component) and 60% w/w of subcutaneous fat. The free fatty acid content (expressed as the acid value) was 10 mg KOH/ g of the sample.

### Example 1

20 kg of fleshings, 10 kg of water and 0.8 kg of isopropylamine were loaded into the pilot scale hydrolyzing reactor. The mixture was heated to 70°C and the temperature was kept for 5 hours under constant stirring.

Two layers separated after termination of the reaction; the lower (aquatic) layer containing gelatin and organic soaps was tested as a resistance inductor on grapevine. The refined fat in the upper layer was not only free of protein, but also completely deacidified. The forming organic soaps - isopropylammonium salts of fatty acids - passed into the aquatic layer.

The refined fat was subsequently subjected to transesterification with methanol which was catalyzed with tetramethylammonium hydroxide; the reaction gave a mixture of fatty acid methylesters and pure glycerin.

### Example 2

20 kg of fleshings, 10 kg of water, 0.8 kg of isopropylamine, 10.3 g of the proteolytic enzyme ALCALASE DX-L (produced by Novo Nordisk) and 0.4 kg of magnesium oxide as a promoter of the enzymatic catalyst were loaded into the pilot scale hydrolyzing reactor. The mixture was heated to 70°C and the temperature was kept for 5 hours under constant stirring.

Two layers separated after termination of the reaction. The lower (aquatic) layer contained a protein hydrolyzate solution the molar weight of which was of a lower order of magnitude compared to Example 1 where the hydrolysis product was gelatin. The lower molar weight makes this protein hydrolyzate suitable for the production of liquid shampoos (lamepones) for sensitive skins. Just as in Example 1, the refined fat in the upper layer was not only free of protein, but also completely deacidified. The forming organic soaps - isopropylammonium salts of fatty acids - passed into the aquatic layer.

The refined fat was subsequently subjected to transesterification with methanol which was catalyzed with tetramethylammonium hydroxide; the reaction gave a mixture of fatty acid methylesters and pure glycerin.

## Claims

1. Method of deproteinization of waste fats and oils, especially those generated as waste by the tanning, meat and food processing industries that are used as a raw material for the production of biostimulators and biofuels, comprising removal of the solid protein fraction and the free fatty acids, **characterized in that** the respective waste feedstock is subjected to alkaline hydrolysis performed by an organic base or a mixture of organic bases, wherein the resulting products of the hydrolysis are separated fractions of a liquid protein hydrolysate and refined fat or oil which is free of both the protein and the free fatty acid components.

2. Method of deproteinization of waste fats and oils according to claim 1, **characterized in that** the organic base or a mixture of organic bases used in the hydrolysis is at least one amine selected from the group comprising isopropylamine, diisopropylamine, butylamine, cyclohexylamine and tetramethylammonium hydroxide.

3. Method of deproteinization of waste fats and oils according to claims 1 or 2, **characterized in that** the alkaline hydrolysis is carried out in the presence of a proteolytic enzyme.

## Patentansprüche

1. Verfahren zur Deproteinisierung von Altfetten und Altölen, insbesondere solchen, die als Abfallprodukte beim Gerben und in der fleisch- und lebensmittelverarbeitenden Industrie anfallen, die als Rohstoffe für die Produktion von Biostimulatoren und Biotreibstoffen verwendet werden, und die Entfernung des festen Proteinanteils umfasst sowie die der freien Fettsäuren, **dadurch gekennzeichnet, dass** der entsprechende Abfallausgangsstoff einer alkalischen Hydrolyse unterzogen wird, die durch eine organische Base oder eine Mischung organischer Basen ausgeführt wird, wobei die dabei entstehenden Hydrolyseprodukte abgetrennte Fraktion eines flüssigen Proteinhydrolysats und raffinierte Fette oder Öle sind, die frei von Protein sowie freien Fettsäurekomponenten sind.

2. Verfahren zur Deproteinisierung von Altfetten und Altölen nach dem Anspruch 1, **da- durch gekennzeichnet,** dass die organische Base oder die Mischung aus organischen Basen, die für die Hydrolyse verwendet wird, mindestens ein Amin aus der Gruppe bestehend aus Isopropylamin, Di-Isopropylamin, Butylamin, Cyclohexylamin und Tetra-methyl-Ammoniumhydroxid ist.

3. Verfahren zur Deproteinisierung von Altfetten und Altölen nach den Ansprüchen 1 oder 2, **dadurch gekennzeichnet, dass** die alkalische Hydrolyse bei Wirkung eines proteolytischen Enzyms durchgeführt wird.

## Revendications

1. Méthode de déprotéinisation des matières grasses et huiles usagées, en particulier celles produites comme déchets des procédures de tannage, des industries de traitement de la viande et autres aliments, qui sont utilisées comme matériau brut pour la production de biostimulateurs et de biocarburants, incluant le retrait de la fraction protéique solide et des acides gras libres, **caractérisée par le fait que** les matières usagées concernées sont sujettes à l'hydrolyse alcaline effectuée par une base organique ou un mélange de bases organiques, les produits résultant de l'hydrolyse étant des fractions séparées d'hydrolysat de protéines liquide et de graisse ou huile raffinée exempte de protéines et d'acides gras libres.

2. Méthode de déprotéinisation des matières grasses et huiles usagées selon la revendication 1, **caractérisée** e **par** le fait que la base organique ou le mélange de bases organiques utilisées dans l'hydrolyse inclut au moins une amine choisie dans le groupe contenant : isopropylamine, diisopropylamine, butylamine, cyclohexylamine et hydroxyde de tétraméthylammonium.

3. Méthode de déprotéinisation des matières grasses et huiles usagées selon la revendications 1 et 2, **caractérérisée par** le fait que l'hydrolyse alcaline est effectuée en présence d'une enzyme protéolytique.
